# EUROPÄISCHE PATENTANMELDUNG

(11) **EP 2 011 969 A1**
(43) Veröffentlichungstag der Anmeldung: **07.01.2009**
(21) Anmeldenummer: 07013007.5
(22) Anmeldetag: 03.07.2007
(51) Int. Cl.: F01D 5/30

(54) **Turbinenanordnung sowie Verfahren zur Befestigung eines Einbauelements**

(71) Anmelder: SIEMENS AKTIENGESELLSCHAFT, 80333 München (DE)
(72) Erfinder: Brillert, Dieter Dr., 63110 Rodgau (DE)

(57) **Zusammenfassung**

Turbinenordnung, Einbauelement (40) einer Turbinenanordnung sowie zugehöriges Verfahren zur Befestigung eines Einbauelementes (40) in einer Turbinenanordnung, wobei die Turbinenanordnung eine um eine Achse (12) drehbare Radscheibe (10), an welcher eine radial nach außen gerichtete erste Verzahnung (20) angeordnet ist, und ein Einbauelement (40) zur Strömungsbeeinflussung umfasst, welches zum Anordnen an der Radscheibe (10) in einer im Wesentlichen radialen Lage vorgesehen ist und welches an einem Fuß (38) in einer Einbaulage eine nach radial innen gerichtete zweite Verzahnung (66) aufweist, wobei die zweite Verzahnung (66) des Einbauelementes (40) durch eine Verschiebung längs der Achse (12) neben die erste Verzahnung (20) bewegbar ist und in dieser Lage in Umfangsrichtung derart gegen die erste Verzahnung (20) verschiebbar ist, dass wenigstens ein Zahn (22; 24; 26; 28; 30; 32; 34) der ersten Verzahnung (20) in axialer Richtung zu einem Zahn der zweiten Verzahnung (66) benachbart an diesem zum Anliegen kommt.

## Beschreibung

Die Erfindung betrifft eine Turbinenanordnung, welche wenigstens eine Radscheibe umfasst, an der wenigstens ein Einbauelement zur Strömungsbeeinflussung befestigbar ist. Weiterhin betrifft die Erfindung ein entsprechendes Einbauelement einer Turbinenanordnung sowie ein Verfahren zur Befestigung eines Einbauelementes.

Turbinenanordnungen gemäß dem Stand der Technik sind als Wärme-Kraftmaschinen weit verbreitet. Ebenso kommen Turbinenanordnungen als Verdichter oder Antriebe zum Einsatz. Dabei ist es oftmals erforderlich, die Strömungsverhältnisse durch Einbauelemente zu beeinflussen oder verschiedene Bereiche innerhalb der Turbinen gegeneinander abzudichten.

Aus dem Stand der Technik ist es bekannt, eine axiale Sicherung eines Dichtbleches bei Turbomaschinen mittels einer umlaufenden Nut in einer Radscheibe und einer Nut in einer Turbinenschaufel zu gewährleisten. Die radiale Sicherung des Dichtbleches wird durch die Nut in der Turbinenschaufel gewährleistet, indem das Dichtblech sich radial nach außen in der Nut der Turbinenschaufel während des Betriebes anlegt.

Aufgabe der vorliegenden Erfindung ist es, eine hinsichtlich einer vereinfachten Montage bzw. Demontage verbesserte Befestigung eines Einbauelementes zur Strömungsbeeinflussung in einen Turbinenanordnung zu ermöglichen.

Diese Aufgabe ist gemäß der Erfindung gelöst durch eine Turbinenanordnung mit den Merkmalen des Anspruches 1, ein Einbauelement einer Turbinenanordnung mit den Merkmalen des Anspruches 17 sowie ein Verfahren zur Befestigung eines Einbauelements mit den Merkmalen des Anspruches 19. Vorteilhafte Weiterbildungen der Erfindung sind in den abhängigen Ansprüchen angegeben.

Eine erfindungsgemäße Turbinenanordnung umfasst eine um eine Achse drehbare Radscheibe, an welcher eine radial nach außen gerichtete erste Verzahnung angeordnet ist, und ein Einbauelement zur Strömungsbeeinflussung, welches zum Anordnen an der Radscheibe in einer im Wesentlichen radialen Lage vorgesehen ist und welches an einem Fuß in einer Einbaulage eine nach radial innen gerichtete zweite Verzahnung aufweist, wobei die zweite Verzahnung des Einbauelementes durch eine Verschiebung längs oder auch diagonal der Achse neben die erste Verzahnung bewegbar ist und in dieser Lage in Umfangsrichtung derart gegen die erste Verzahnung verschiebbar ist, dass wenigstens ein Zahn der ersten Verzahnung in axialer Richtung zu einem Zahn der zweiten Verzahnung benachbart an diesem zum Anliegen kommt.

Vorteilhafterweise ermöglicht dies eine einfache axiale Sicherung eines Einbauelements bei gleichzeitig einfacher Montier- und Demontierbarkeit. Vorzugsweise kann das Einbauelement in einfacher Weise entsichert und insbesondere separat axial entnommen werden, sodass ein Wartungsvorgang vereinfacht werden kann.

Bei der Turbinenanordnung handelt es sich insbesondere um eine Turbinenanordnung einer Wärme-Kraftmaschine oder vorzugsweise um eine Gasturbine.

Die Radscheibe umfasst dabei insbesondere wenigstens eine Turbinenschaufel. Diese kann auswechselbar mit der Radscheibe verbunden sein.

Gemäß einer ersten Ausgestaltung ist vorgesehen, dass das Einbauelement ein Dichtelement, insbesondere ein Dichtblech umfasst. Das Dichtblech dient dabei beispielsweise dazu, verschiedene Druckbereiche der Turbinenanordnung gegeneinander abzudichten. Dabei kann es sich insbesondere um verschiedene Druck- oder/und Temperaturbereiche handeln. Ein Dichtblech ist insbesondere zwischen verschiedenen Radscheiben vorgesehen.

Gemäß einer anderen Ausgestaltung ist vorgesehen, dass das Einbauelement ein Strömungsleitelement, insbesondere ein Strömungsleitblech umfasst. Ein Strömungsleitblech kann insbesondere vorgesehen sein, um eine Strömung innerhalb der Turbinenanordnung von einem Segment in ein anderes Segment geeignet überzuleiten. Weiterhin kann vorgesehen sein, ein Dichtblech mit einem Strömungsleitblech zu kombinieren. Weiterhin kann das Einbauelement dazu dienen, in der Radscheibe in axialen Nuten eingeschobene Laufschaufeln gegen eine Verschiebung entlang ihrer Nut zu sichern.

Die erste Verzahnung und die zweite Verzahnung umfassen jeweils zumindest einen Zahn. Insbesondere ist eine einzelne Erhebung am Umfang der Radscheibe bzw. an der Unterseite des Fußes des Einbauelements als Zahn aufzufassen. Die "Richtung" der ersten bzw. zweiten Verzahnung ist jeweils durch die Richtung der Erhebung des mindestens einen Zahnes bestimmt. Die erste Verzahnung ist beispielsweise so ausgestaltet, dass ein Zahnkopf bündig mit einem (Außen-)Umfang der Radscheibe abschließt. Dies ist insbesondere dadurch realisierbar, dass Nuten in die Radscheibe hineingefräst werden. Es kann jedoch auch vorgesehen sein, die Zähne der ersten Verzahnung als vom Außenumfang der Radscheibe ausgehende Erhebungen auszugestalten, welche über den Außenumfang der Radscheibe hinausstehen. In einem Fall eines mit dem Außenumfang der Radscheibe bündigen Zahnkopfes ist in axialer Richtung neben der ersten Verzahnung vorzugsweise eine Nut vorgesehen, in welcher der Fuß des Einbauelementes in Umfangsrichtung verschiebbar ist.

Eine Halterung des Einbauelementes wird vorzugsweise erleichtert, wenn zu der ersten Verzahnung längs der Achse beabstandet ein Halteelement vorgesehen ist, welches als Widerlager gegen eine Verschiebung des Einbauelementes längs der Achse oder/und radial nach außen vorgesehen ist. Das Halteelement ist beispielsweise hakenförmig ausgestaltet, so dass der Fuß zumindest teilweise übergriffen werden kann. Alternativ oder zusätzlich kann das Halteelement eine Nut aufweisen, in welche der Fuß eingreifen kann.

In einer Variante ist wenigstens ein erhabener Absatz an einem Umfang der Radscheibe vorgesehen, welcher wenigstens eine im Wesentlichen zu der ersten Verzahnung der Radscheibe ausgerichtete Nut aufweist, in welche wenigstens ein Fortsatz an dem Fuß des Einbauelementes einführbar ist, wobei der Fuß in einem eingeführten Zustand zumindest in radial äußerer Richtung auf der Radscheibe derart gehaltert ist, dass der Fortsatz - in Umgangsrichtung gesehen - lückenlos an einer Seitenwand der Nut (56) anliegt und wobei der Fuß durch eine Verschiebung in Umfangsrichtung der Radscheibe zwischen dem erhabenen Absatz und der ersten Verzahnung in axialer Richtung der Radscheibe fixierbar ist.

Gemäß einer Weiterbildung ist vorgesehen, dass die Radscheibe wenigstens einen ersten axialen Abschnitt mit einem ersten Durchmesser und einen zweiten axialen Abschnitt mit einem zweiten Durchmesser umfasst, wobei der zweite Durchmesser größer als der erste Durchmesser ist. Der zweite axiale Abschnitt umfasst dabei beispielsweise einen Bereich, in dem wenigstens eine Turbinenschaufel angeordnet ist. Insbesondere kann die Radscheibe mehrstückig ausgestaltet sein, wobei der erste axiale Abschnitt mit dem zweiten axialen Abschnitt verbunden ist.

In einer weiteren Ausgestaltung ist vorgesehen, dass der erhabene Absatz durch einen Übergang zwischen dem ersten und dem zweiten axialen Abschnitt gebildet ist. Vorzugsweise ermöglicht dies eine lediglich geringe Abwandlung einer herkömmlichen Radscheibe.

Gemäß einer Weiterbildung ist vorgesehen, dass ein axialer Abstand zwischen der ersten Verzahnung und dem Halteelement, insbesondere dem erhabenen Absatz, einer Länge des Fußes in axialer Richtung entspricht, wobei der Fortsatz bei der Bestimmung der Länge nicht berücksichtigt ist. Vorzugsweise ermöglicht dies eine im Wesentlichen spielfreie Halterung in axialer Richtung.

Der Fuß wird beispielsweise durch eine untere Kante eines Dichtbleches gebildet, wobei an einer dem Halteelement, insbesondere dem erhabenen Absatz zugewandeten Seite des Fußes beispielsweise wenigstens ein nasenförmiger Fortsatz angebracht ist, welcher in die Nut eingreifen kann. Es kann jedoch auch vorgesehen sein, den Fuß breiter als das Dichtblech auszugestalten, sodass beispielsweise eine verringerte Kippneigung erzielt wird. Insbesondere kann es sich bei dem Fuß um ein komplex ausgestaltetes Formteil handeln, welches mit dem Einbauelement verbindbar oder fest verbunden ist.

Vorzugsweise wird eine seitliche Kippneigung verringert oder/und eine seitliche Halterung erleichtert, wenn die zweite Verzahnung an einem ersten Rand und einem zweiten Rand des Fußes des Einbauelementes mit jeweils einem Zahn abgeschlossen ist.

Gemäß einer Variante ist vorgesehen, dass die erste und/oder die zweite Verzahnung ein Rechteckprofil aufweisen. Insbesondere ermöglicht eine Rechteckverzahnung eine einfache Herstellung mit einem Fräsverfahren.

In einer weiteren Variante ist eine erste Zahnbreite der ersten Verzahnung kleiner als eine zweite Zahnbreite der zweiten Verzahnung - jeweils gesehen in Umfangsrichtung der Radscheibe. Vorzugsweise ermöglicht dies einen möglichst geringen herstellungstechnischen Aufwand einer Verzahnung an der Radscheibe. Weiterhin ermöglicht dies vorzugsweise einen nur geringen zusätzlichen Aufwand gegenüber herkömmlichen Radscheiben.

Weiterhin kann vorgesehen sein, die erste und die zweite Verzahnung nicht streng komplementär zueinander auszugestalten. Vorzugsweise ermöglicht dies eine leichtere Führung des Fußes in axialer Richtung bei einer insbesondere verringerten Verkantungsneigung. Beispielsweise kann die erste Verzahnung streng im Querschnitt rechteckförmig ausgestaltet sein, wohingegen die zweite Verzahnung abgerundet oder rund ausgestaltet ist.

Gemäß einer Weiterbildung ist vorgesehen, dass ein Zahnkopf der ersten Verzahnung zur Seite des Halteelementes, insbesondere des erhabenen Absatzes, abfallend ausgestaltet ist. Dies ermöglicht beispielsweise, dass das Einbauelement in radialer Richtung von oben auf die erste Verzahnung aufgesetzt werden kann und entlang des abfallenden Zahnkopfes in das Halteelement, insbesondere eine Nut hineingleiten kann. Vorzugsweise wird dadurch das Einführen des Fortsatzes des Fußes in das Haltelement bzw. die Nut erleichtert.

Alternativ oder zusätzlich ist gemäß einer weiteren Ausgestaltung vorgesehen, dass ein Zahnlückengrund der zweiten Verzahnung zum Halteelement, insbesondere zum erhabenen Absatz hin ansteigend ausgestaltet ist. Dies ermöglicht vorzugsweise ein leichteres Einführen des Fortsatzes des Fußes in das Halteelement, insbesondere eine Nut, in dem der Fuß in radialer Richtung auf die erste Verzahnung aufgesetzt wird und in das Halteelement bzw. die Nut hineingleitet.

Für ein verbessertes Führungsverhalten der ersten Verzahnung in Eingriff mit der zweiten Verzahnung ist gemäß einer Weiterbildung vorgesehen, dass die erste und/oder die zweite Verzahnung zumindest an einer Zahnquerseite eine Fase aufweisen. Vorzugsweise vermindert dies eine Verkantungsgefahr der ersten Verzahnung im Eingriff mit der zweiten Verzahnung.

Gemäß einer Variante sind die erste und die zweite Verzahnung als Geradverzahnung ausgestaltet. Es kann jedoch auch eine Schrägverzahnung vorgesehen sein, sodass die Zähne schräg zur axialen Richtung der Radscheibe ausgerichtet sind. Vorzugsweise ermöglicht dies eine Selbstsicherung des Einbauelementes bei einem Betrieb der Turbinenanordnung, sodass eine Bewegung des Fußes in axialer Richtung über die erste Verzahnung hinweg erschwert wird.

In einer Ausgestaltung ist wenigstens ein Verriegelungselement zur Verriegelung einer Position der zweiten Verzahnung relativ zur ersten Verzahnung vorgesehen. Vorteilhafterweise ermöglicht dies ein unerwünschtes Lösen des Einbauelementes von der Radscheibe.

In einer Weiterbildung ist vorgesehen, dass das Verriegelungselement wenigstens ein durch eine erste Zahnlücke der ersten Verzahnung und eine damit fluchtende zweite Zahnlücke der zweiten Verzahnung biegbares Sicherungsblech umfasst. Das Sicherungsblech ist dabei beispielsweise als Kreisringsegment ausgestaltet, wobei wenigstens eine in eine Zahnlücke einbiegbare Lasche an einem radial inneren Rand vorgesehen ist. Für eine Fixierung des Sicherungsbleches an der Radscheibe ist beispielsweise vorgesehen, dass daran befindliche Federlaschen in Zahnlücken eingreifen.

Gemäß einer weiteren Variante ist vorgesehen, dass das Verriegelungselement wenigstens einen in eine erste Zahnlücke der ersten Verzahnung und eine damit fluchtende zweite Zahnlücke der zweiten Verzahnung hineingreifenden Bolzen umfasst. Dieser wird beispielsweise mittels einer Verschraubung fixiert.

Die Erfindung betrifft außerdem ein Einbauelement einer Turbinenanordnung gemäß einer der vorgeschriebenen Ausgestaltungen, wobei das zur Strömungsbeeinflussung vorgesehene Einbauelement an einer Unterseite eines Fußes des Einbauelementes wenigstens eine zweite Verzahnung aufweist.

Gemäß einer Weiterbildung ist wenigstens ein Fortsatz am Fuß des Einbauelementes vorgesehen, welcher in ein an der Radscheibe vorgesehenes Halteelement, insbesondere in eine stirnseitig angeordnete Nut einführbar ist, welches als Widerlager gegen eine Verschiebung des Einbauelementes längs der Achse oder/und radial nach außen vorgesehen ist.

Da sich der Fortsatz zwischen den beiden Seitenrändern des Einbauelements kontinuierlich erstreckt, kann dieser an der äußeren der beiden Seitenwände der Nut entlang einer lückenlosen Kontaktlinie anliegen. Durch den lückenlosen Kontakt von Fortsatz und Seitenwand der Nut kann eine besonders effiziente Abdichtung zweier Raumbereiche mit unterschiedlichen Drücken erreicht werden, wobei die Raumbereiche dabei beidseitig des Einbauelements vorhanden sind.

Schließlich betrifft die Erfindung ein Verfahren zur Befestigung eines um eine Achse drehbar gelagerten Einbauelements an einer Radscheibe einer Turbinenanordnung, insbesondere gemäß einer der vorgeschriebenen Ausgestaltungen, wobei die Radscheibe eine radial nach außen zeigende erste Verzahnung aufweist und wobei eine radial nach innen zeigende zweite Verzahnung an einer Unterseite eines Fußes des Einbauelementes in einer Längsrichtung der Achse neben die erste Verzahnung verschoben wird und anschließend der Fuß in Umfangsrichtung der Radscheibe so verschoben wird, dass wenigstens ein erster Zahn der ersten Verzahnung wenigstens einen zweiten Zahn der zweiten Verzahnung gegen eine Verschiebung entgegen der Längsrichtung sperrt. Als Haltelement ist beispielsweise ein erhabener Absatz an einem Umfang der Radscheibe vorgesehen, welcher wenigstens eine zu einer Stirnseite der Radscheibe ausgerichtete Nut aufweist. Vorzugsweise kann eine einfache Demontage des Einbauelements erfolgen, in dem die voranbeschriebenen Verfahrensschritte in umgekehrter Richtung ausgeführt werden. Dazu wird der Fuß beispielsweise um einen halben Zahnabstand der ersten Verzahnung in Umfangsrichtung verschoben, sodass der erste Zahn der ersten Verzahnung mit einer Lücke der zweiten Verzahnung fluchtet. Entsprechend ist vorzugehen, wenn die Verzahnungen jeweils mehr als einen Zahn aufweisen.

In einer Ausgestaltung ist vorgesehen, dass der Fuß in axialer Richtung zwischen einem zur Halterung des Fußes an der Radscheibe vorgesehenen Halteelement und der ersten Verzahnung gehalten wird und insbesondere von dem Halteelement an einer radial nach außen gerichteten Verschiebung gehindert wird.

Gemäß einer Weiterbildung wird der Fuß gegen ein Verschieben in Umfangsrichtung fixiert, in dem mit wenigstens einem Verriegelungselement in wenigstens eine erste Zahnlücke der ersten Verzahnung und wenigstens eine damit fluchtende zweite Zahnlücke der zweiten Verzahnung eingegriffen wird, insbesondere eine Nase eines Abdeckbleches eingebogen wird. Eine Entriegelung erfolgt vorzugsweise in einfacher Weise dadurch, dass das Verriegelungselement wieder aus der Zahnlücke entfernt wird. Bei Verwendung eines Abdeckbleches wird insbesondere die Nase des Abdeckbleches wieder aus der Zahnlücke herausgebogen.

Im Folgenden wird die Erfindung anhand der Zeichnungen im Einzelnen beispielhaft erläutert. Die Erfindung ist jedoch nicht auf die dort gezeigten Merkmalskombinationen beschränkt. Vielmehr sind jeweils in der Beschreibung einschließlich der Figurenbeschreibung sowie den Figuren dargestellte Merkmale zu Weiterbildungen miteinander kombinierbar.

Es zeigen:
- FIG 1: eine Seitenansicht einer ersten Radscheibe;
- FIG 2: eine Schrägansicht einer zweiten Radscheibe;
- FIG 3: ein erstes Einbauelement;
- FIG 4: einen Fuß des ersten Einbauelements in einer Detailansicht; und
- FIG 5: ein zweites Einbauelement in einer Einbaulage.

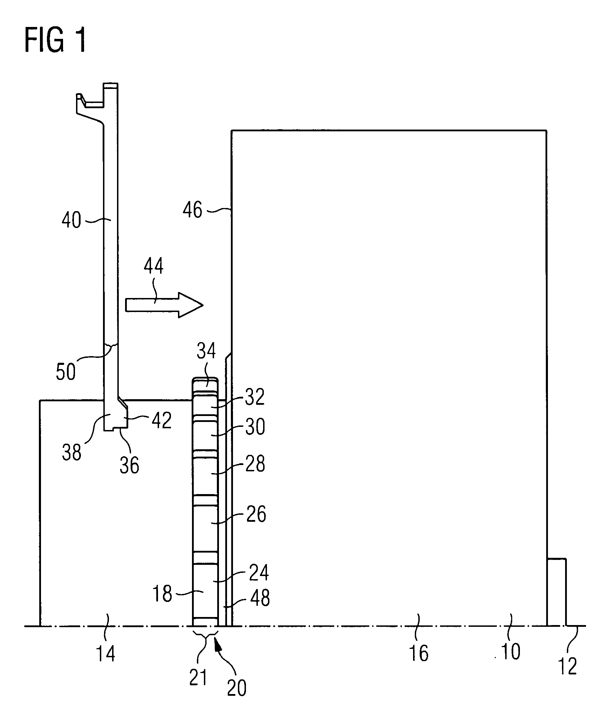

FIG 1 zeigt eine erste Radscheibe 10 einer nicht im Einzelnen dargestellten Turbinenanordnung in einer Seitenansicht. Die erste Radscheibe 10 ist dabei nur hälftig dargestellt, wobei die erste Radscheibe 10 im Wesentlichen symmetrisch zu einer Achse 12 ausgestaltet ist. Die erste Radscheibe 10 umfasst einen ersten axialen Abschnitt 14 sowie einen zweiten axialen Abschnitt 16, wobei der erste axiale Abschnitt 14 einen kleineren Durchmesser als der zweite axiale Abschnitt 16 aufweist.

Im zweiten axialen Abschnitt 16 sind üblicherweise sich entlang der Axialrichtung erstreckende Haltenuten (nicht dargestellt) zur Aufnahme von Laufschaufeln vorgesehen. Zum Bestücken der Radscheibe 10 mit Laufschaufeln sind diese mit ihren zur Nut korrespondierenden Füße darin einschiebbar.

In axialer Richtung beabstandet zu dem zweiten axialen Abschnitt 16 befindet sich an einem Umfangsabschnitt 18 der ersten Radscheibe 10 eine erste Verzahnung 20, welche über eine erste Zahnbreite 21 erstreckt ist. Diese weist eine Reihe äquidistant angeordneter Zähne 24; 26; 28; 30; 32; 34 auf. Die erste Verzahnung 20 ist so ausgestaltet, dass eine in FIG 1 nicht im Einzelnen dargestellte zweite Verzahnung an einer Unterseite 36 eines Fußes 38 eines Einbauelementes 40 damit in Eingriff bringbar ist.

Bei dem Einbauelement 40 handelt es sich um ein Dichtblech. Das Dichtblech resp. das Einbauelement 40 dient einerseits zur Sicherung der Laufschaufeln gegen eine Verschiebung entlang ihrer Haltenut und andererseits als Trennelement zwischen zwei Räumen mit unterschiedlichen Drücken. Das Einbauelement 40 weist am Fuß 38 einen Fortsatz 42 auf, welcher bei einer Verschiebung längs einer durch den Pfeil 44 angedeuteten axialen Richtung neben die erste Verzahnung 20 bewegt und in eine nicht im einzelnen dargestellte Nut an einer Stirnseite 46 des zweiten axialen Abschnittes 16 eingreifen kann. Ein Abstand 48 zwischen der ersten Verzahnung 20 und dem zweiten axialen Abschnitt 16 entspricht dabei einer Länge 50 des Fußes 38 des zweiten Einbauelementes 40, wobei der Fortsatz 42 bei der Bestimmung der Länge 50 nicht berücksichtigt ist.

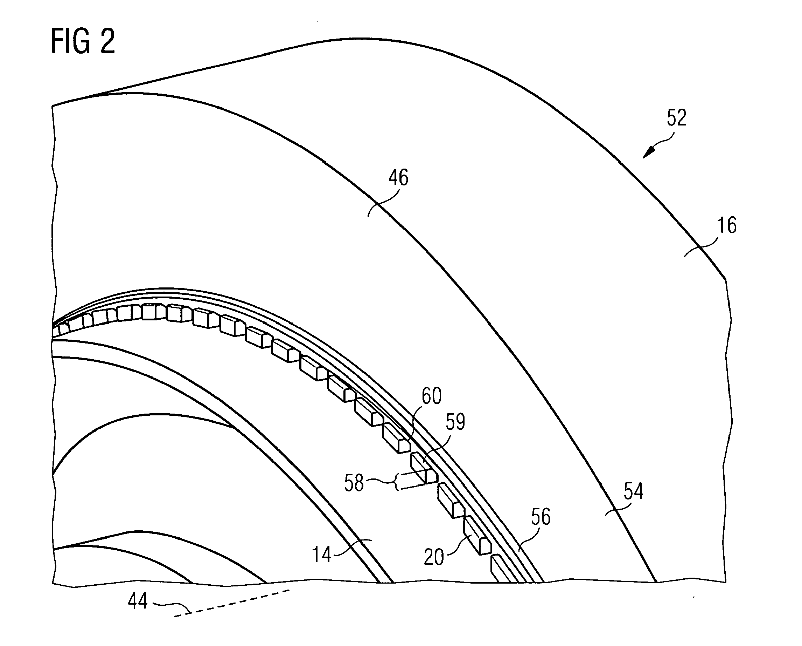

FIG 2 zeigt eine Schrägansicht einer zweiten Radscheibe 52. Diese entspricht im Wesentlichen der in FIG 1 gezeigten ersten Radscheibe 10. Dementsprechend weist die zweite Radscheibe 52 einen ersten axialen Abschnitt 14 sowie einen zweiten axialen Abschnitt 16 auf. Der zweite axiale Abschnitt 16 bildet dabei einen erhabenen Absatz 54, an dessen Stirnseite 46 eine zur Stirnseite 46 ausgerichtete Nut 56 vorgesehen ist, welche als Halteelement dient. Der erhabene Absatz 54 ist dabei in einer axialen Richtung 44 von einer ersten Verzahnung 20 beabstandet. Die Nut 56 ist dabei so ausgestaltet, dass ein Fortsatz eines nicht dargestellten Einbauelementes in axialer Richtung 44 in die Nut 56 eingeführt werden kann.

In einer Projektion in axialer Richtung 44 weist die erste Verzahnung 20 ein Rechteckprofil auf. Ein Zahnkopf 58 der ersten Verzahnung 20 ist zur Seite des erhabenen Absatzes 54 abfallend ausgestaltet. Des Weiteren weist die erste Verzahnung 20 an einer Zahnquerseite 59 eine Fase 60 auf.

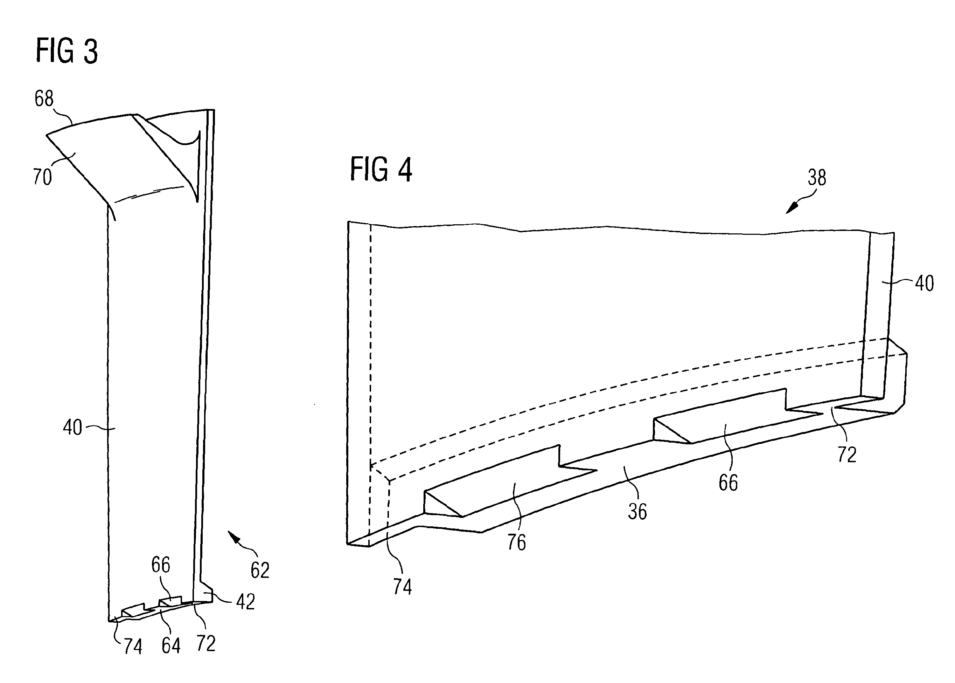

FIG 3 zeigt ein erstes Einbauelement 40. Bei diesem handelt es sich um ein Dichtelement 62, an dessen unteren radialen Rand 64 eine zweite Verzahnung 66 sowie ein Fortsatz 42 vorgesehen ist. An einem oberen radialen Rand 68 ist ein Flügel 70 vorgesehen, welcher zur Abdichtung und/oder Strömungsleitung dient. Der untere Rand 64 des ersten Einbauelementes 40 ist dabei so ausgestaltet, dass dieser an einem ersten Rand 72 und einem zweiten Rand 74 mit jeweils einem Zahn abgeschlossen ist.

FIG 4 zeigt den Fuß 38 des ersten Einbauelementes 40 in einer Detailansicht. Die zweite Verzahnung 66 an der Unterseite 36 des Fußes 38 weist ein Rechteckprofil auf. Ein Zahnlückengrund 76 ist dabei zur bei einem Einbau dem nicht dargestellten Halteelement bzw. dem erhabenen Absatz gegenüberliegenden Seite ansteigend ausgestaltet. In einer nicht dargestellten Variante kann jedoch auch ein nicht geneigter Zahnlückengrund vorgesehen sein. Weiterhin umfasst der Fuß 38 einen Fortsatz 42 sowie weitere nicht im Einzelnen dargestellte Fortsätze, welche in das Halteelement eingreifen können. Diese sind beispielsweise als an das Blech angeschweißte Blechlaschen ausgestaltet.

Für eine Befestigung des Einbauelementes 40 ist vorgesehen, dass dies, wie in Fig. 1 dargestellt, in axialer Richtung 12 der Radscheibe 10 verschoben wird, wobei zunächst die ersten Verzahnung 20 und die zweite Verzahnung 66 miteinander in Eingriff gebracht werden und wobei bei einer weiteren axialen Verschiebung der Fortsatz 42 in die Nut 56 eingeführt wird. Hierdurch wird die zweite Verzahnung 66 neben die erste Verzahnung 20 bewegt. Anschließend wird der Fuß 38 des Einbauelementes 40 so in Umfangsrichtung der Radscheibe 10 verschoben, dass die erste Verzahnung 20 den Fuß 38 des Einbauelementes 40 gegen ein Herausbewegen aus der Nut 56 fixiert. Dadurch wird der Fuß 38 in axialer Richtung 44 zwischen der ersten Verzahnung 20 und dem erhabenen Absatz 54 fixiert.

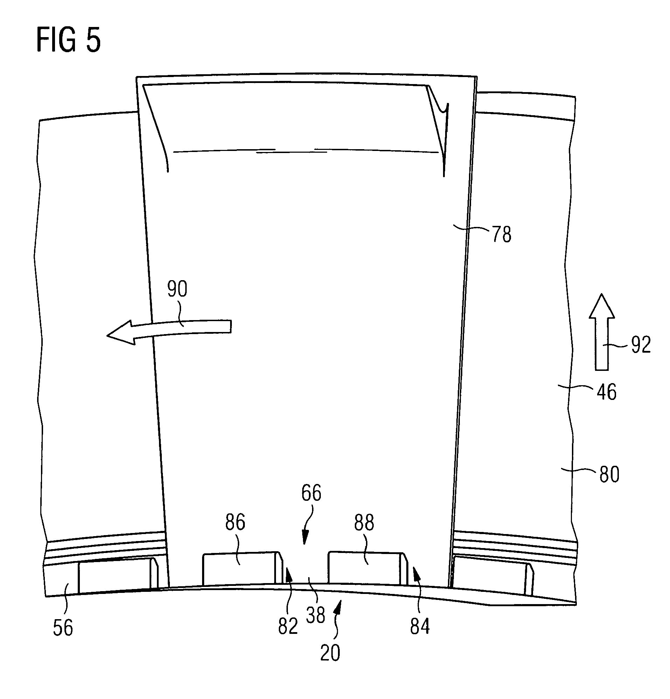

FIG 5 zeigt ein zweites Einbauelement 78, welches im Wesentlichen dem zuvor gezeigten ersten Einbauelement entspricht, in einer Einbaulage. Dargestellt ist eine Stirnseite 46 einer dritten Radscheibe 80, welche eine zu dieser ausgerichtete Nut 56 aufweist. Weiterhin ist aus der axialen Blickrichtung der dritten Radscheibe 80 eine erste Verzahnung 20 dargestellt. Das zweite Einbauelement 78 ist dabei so zur dritten Radscheibe 80 ausgerichtet, dass eine erste Zahnlücke 82 und eine zweite Zahnlücke 84 einer zweiten Verzahnung 66 an einem Fuß 38 des dritten Einbauelements 78 mit einem ersten Zahn 86 und einem zweiten Zahn 88 der ersten Verzahnung 20 fluchten, sodass das dritte Einbauelement 78 mit einem nicht dargestellten Fortsatz in die Nut 56 eingeführt werden kann. Zur Verriegelung des zweiten Einbauelements 78 wird dieses entlang einer Umfangsrichtung 90 soweit verschoben, dass die ersten Zahnlücke 82 nicht mehr mit dem ersten Zahn 86 und die zweite Zahnlücke 84 nicht mehr mit dem zweiten Zahn 88 fluchten. Dadurch wird das zweite Einbauelement 78 in axialer Richtung fixiert. Gleichzeitig wird es durch den nicht dargestellten Fortsatz, welcher in die Nut 56 eingreift, in einer radial äußeren Richtung 92 und insbesondere entgegen der radial äußeren Richtung 92 fixiert. Zur Fixierung des zweiten Einbauelementes 78 in der Umfangsrichtung 90 kann ein nicht dargestelltes Sicherungsblech beispielsweise mit einer Lasche durch die erste und/oder zweite Zahnlücke 82; 84 hindurch in eine nicht dargestellte entsprechende Lücke der ersten Verzahnung eingreifen, sodass eine Verriegelung in Umfangsrichtung gewährleistet ist.

## Patentansprüche

1. Turbinenanordnung mit einer um eine Achse (12) drehbaren Radscheibe (10; 52; 80),
an welcher eine radial nach außen gerichtete erste Verzahnung (20) angeordnet ist, und
einem Einbauelement (40; 62; 78) zur Strömungsbeeinflussung, welches zum Anordnen an der Radscheibe (10; 52; 80) in einer im Wesentlichen radialen Lage vorgesehen ist und welches an einem Fuß (38) in einer Einbaulage eine nach radial innen gerichtete zweite Verzahnung (66) aufweist, wobei die zweite Verzahnung (66) des Einbauelementes (40; 62; 78) durch eine Verschiebung längs der Achse (12) neben die erste Verzahnung (20) bewegbar ist und in dieser Lage in Umfangsrichtung (90) derart gegen die erste Verzahnung (20) verschiebbar ist, dass wenigstens ein Zahn (22; 24; 26; 28; 30; 32; 34) der ersten Verzahnung (20) in axialer Richtung zu einem Zahn (86; 88) der zweiten Verzahnung (66) benachbart an diesem zum Anliegen kommt.

2. Turbinenanordnung nach Anspruch 1,
**dadurch gekennzeichnet, dass**
das Einbauelement (40; 62; 78) ein Dichtelement (62), insbesondere ein Dichtblech umfasst.

3. Turbinenanordnung nach Anspruch 1,
**dadurch gekennzeichnet, dass**
das Einbauelement (40; 62; 78) ein Strömungsleitelement (70), insbesondere ein Strömungsleitblech umfasst.

4. Turbinenanordnung nach einem der vorhergehenden Ansprüche,
**dadurch gekennzeichnet, dass**
zu der ersten Verzahnung (20) längs der Achse (12) beabstandet ein Halteelement (56) vorgesehen ist, welches als Widerlager gegen eine Verschiebung des Einbauelementes (40; 62; 78) längs der Achse (12) oder/und radial nach außen vorgesehen ist.

5. Turbinenanordnung nach Anspruch 4,
**dadurch gekennzeichnet, dass**
wenigstens ein erhabener Absatz (54) an einem Umfang der Radscheibe (10; 52; 80) vorgesehen ist,
welcher wenigstens eine im Wesentlichen zu der ersten Verzahnung (20) der Radscheibe (10; 52; 80) ausgerichtete Nut (56) aufweist,
in welche wenigstens ein Fortsatz (42) an dem Fuß (38) des Einbauelementes (40; 62; 78) einführbar ist,
wobei der Fuß (38) in einem eingeführten Zustand zumindest in radial äußerer Richtung auf der Radscheibe (10; 52; 80) derart gehaltert ist,
dass der Fortsatz - in Umgangsrichtung gesehen - lückenlos an einer Seitenwand der Nut (56) anliegt und wobei der Fuß (38) durch eine Verschiebung in Umfangsrichtung (90) der Radscheibe (10; 52; 80) zwischen dem erhabenen Absatz (54) und der ersten Verzahnung (20) in axialer Richtung der Radscheibe (10; 52; 80) fixierbar ist.

6. Turbinenanordnung nach einem der vorhergehenden Ansprüche,
**dadurch gekennzeichnet, dass**
die Radscheibe (10; 52; 80) wenigstens einen ersten axialen Abschnitt (14) mit einem ersten Durchmesser und einen zweiten axialen Abschnitt (16) mit einem zweiten Durchmesser umfasst,
wobei der zweite Durchmesser größer als der erste Durchmesser ist.

7. Turbinenanordnung nach den Ansprüchen 5 und 6,
**dadurch gekennzeichnet, dass**
der erhabene Absatz (54) durch einen Übergang zwischen dem ersten und dem zweiten axialen Abschnitt (14; 16) gebildet ist.

8. Turbinenanordnung nach Anspruch 4,
**dadurch gekennzeichnet, dass**
ein axialer Abstand (48) zwischen der ersten Verzahnung (20) und dem Halteelement (56) einer Länge (50) des Fußes (38) in axialer Richtung entspricht,
wobei der Fortsatz (42) bei der Bestimmung der Länge (50) nicht berücksichtigt ist.

9. Turbinenanordnung nach einem der vorhergehenden Ansprüche,
**dadurch gekennzeichnet, dass**
die zweite Verzahnung (66) an einem ersten Rand (72) und einem zweiten Rand (74) des Fußes (38) des Einbauelementes (40; 62; 78) mit jeweils einem Zahn abgeschlossen ist.

10. Turbinenanordnung nach einem der vorhergehenden Ansprüche,
**dadurch gekennzeichnet, dass**
die erste und/oder die zweite Verzahnung (20; 66) ein Rechteckprofil aufweisen.

11. Turbinenanordnung nach Anspruch 4,
**dadurch gekennzeichnet, dass**
ein Zahnkopf (58) der ersten Verzahnung (20) zum Halteelement (56) abfallend ausgestaltet ist.

12. Turbinenanordnung nach Anspruch 11,
**dadurch gekennzeichnet, dass**
ein Zahnlückengrund (76) der zweiten Verzahnung (66) zum Halteelement (56) ansteigend ausgestaltet ist.

13. Turbinenanordnung nach einem der vorhergehenden Ansprüche,
**dadurch gekennzeichnet, dass**
die erste und/oder die zweite Verzahnung (66) zumindest an einer Zahnquerseite (59) eine Fase (60) aufweisen.

14. Turbinenanordnung nach einem der vorhergehenden Ansprüche,
**dadurch gekennzeichnet, dass**
wenigstens ein Verriegelungselement zur Verriegelung einer Position der zweiten Verzahnung (66) relativ zur ersten Verzahnung (20) vorgesehen ist.

15. Turbinenanordnung nach Anspruch 14,
**dadurch gekennzeichnet, dass**
das Verriegelungselement wenigstens ein in eine erste Zahnlücke (82) der ersten Verzahnung (20) und eine damit fluchtende zweite Zahnlücke (84) der zweiten Verzahnung (66) einbiegbares Sicherungsblech umfasst.

16. Turbinenanordnung nach Anspruch 14,
**dadurch gekennzeichnet, dass**
das Verriegelungselement wenigstens einen in eine erste Zahnlücke der ersten Verzahnung (20) und eine damit fluchtende zweite Zahnlücke der zweiten Verzahnung (66) hineingreifenden Bolzen umfasst.

17. Einbauelement (40; 62; 78) einer Turbinenanordnung nach einem der vorhergehenden Ansprüche 1 bis 16,
wobei das zur Strömungsbeeinflussung vorgesehene Einbauelement (40; 62; 78) an einer Unterseite eines Fußes (38) des Einbauelementes (40; 62; 78) wenigstens eine zweite Verzahnung (66) aufweist.

18. Einbauelement (40; 62; 78) nach Anspruch 17,
**dadurch gekennzeichnet, dass**
wenigstens ein Fortsatz am Fuß (38) des Einbauelementes (40; 62; 78) vorgesehen ist,
welcher in ein an der Radscheibe (10; 52; 80) vorgesehenes Halteelement (56) einführbar ist,
welches als Widerlager gegen eine Verschiebung des Einbauelementes (40; 62; 78) längs der Achse (12) oder/und radial nach außen vorgesehen ist.

19. Verfahren zur Befestigung eines Einbauelementes (40; 62; 78) an einer um eine Achse (12) drehbar gelagerten Radscheibe (10; 52; 80) einer Turbinenanordnung,
wobei die Radscheibe (10; 52; 80) eine radial nach außen zeigende erste Verzahnung (20) aufweist und wobei eine radial nach innen zeigende zweite Verzahnung (66) an einer Unterseite (36) eines Fußes (38) des Einbauelementes (40; 62; 78) in einer Längsrichtung der Achse (12) neben die erste Verzahnung (20) verschoben wird und anschließend der Fuß (38) in Umfangsrichtung (90) der Radscheibe (10; 52; 80) so verschoben wird, dass wenigstens ein erster Zahn (22; 24; 26; 28; 30; 32; 34) der ersten Verzahnung (20) wenigstens einen zweiten Zahn (86; 88) der zweiten Verzahnung (66) gegen eine Verschiebung entgegen der Längsrichtung sperrt.

20. Verfahren nach Anspruch 19,
**dadurch gekennzeichnet, dass**
der Fuß (38) in axialer Richtung zwischen einem zur Halterung des Fußes (38) an der Radscheibe (10; 52; 80) vorgesehenen Halteelement (56) und der ersten Verzahnung (20) gehalten wird und insbesondere von dem Halteelement (56) an einer radial nach außen gerichteten Verschiebung gehindert wird.

21. Verfahren nach Anspruch 19 oder 20,
**dadurch gekennzeichnet, dass**
der Fuß (38) gegen ein Verschieben in Umfangsrichtung (90) fixiert wird, indem mit wenigstens einem Verriegelungselement durch wenigstens eine erste Zahnlücke (82; 84) der ersten Verzahnung (20) und wenigstens eine damit fluchtende zweite Zahnlücke der zweiten Verzahnung (66) eingegriffen wird,
insbesondere eine Nase eines Abdeckbleches eingebogen wird.
